Europäisches Patentamt

European Patent Office

Office européen des brevets

(19)

(11) Veröffentlichungsnummer : **0 161 583**
**B1**

(12) # EUROPÄISCHE PATENTSCHRIFT

(45) Veröffentlichungstag der Patentschrift :
21.12.88

(21) Anmeldenummer : 85105328.0

(22) Anmeldetag : 02.05.85

(51) Int. Cl.⁴ : **C 08 L 29/14**, C 08 K   5/07,
B 32 B   17/10

(54) Reduzierung des Haftvermögens an Glas von thermoplastischen, weichmacherhaltigen Polyvinylbutyralformmassen.

(30) Priorität : 12.05.84 DE 3417654

(43) Veröffentlichungstag der Anmeldung :
21.11.85 Patentblatt 85/47

(45) Bekanntmachung des Hinweises auf die Patenterteilung : 21.12.88 Patentblatt 88/51

(84) Benannte Vertragsstaaten :
AT BE DE FR GB IT NL SE

(56) Entgegenhaltungen :
US—A— 3 249 487

(73) Patentinhaber : HOECHST AKTIENGESELLSCHAFT
Postfach 80 03 20
D-6230 Frankfurt am Main 80 (DE)

(72) Erfinder : Fock, Kurt, Dr.
Fuchshohl 21
D-6232 Bad Soden am Taunus (DE)
Erfinder : Hermann, Hans Dieter, Dr.
Am Dachsbau 7
D-6232 Bad Soden am Taunus (DE)
Erfinder : Fabian, Klaus
Drosselweg 11
D-6239 Kriftel (DE)
Erfinder : Ebigt, Joachim, Dr.
Frauenlobstrasse 76A
D-6000 Frankfurt am Main 90 (DE)

EP 0 161 583 B1

**0 161 583**

**Beschreibung**

Die Erfindung betrifft thermoplastische, weichmacherhaltige Polyvinylbutyralformmassen, insbesondere Folien, mit reduzierter Glashaftung, die als Antihaftungsmittel ein Metallsalz und/oder Metallchelat eines enolisierbaren β-Diketons oder Gemische dieser Verbindungen enthalten, Verfahren zu ihrer Herstellung sowie ihre Verwendung zur Herstellung von Glasverbunden.

Verbundsicherheitsglas besteht aus mindestens zwei oder mehr Glasscheiben mit einer oder mehreren verbindenden Zwischenlagen aus Kunststoff-Folie. Die Zwischenlage aus Kunststoff erfüllt den Zweck, daß die Verbundscheibe bei einem Aufprall nicht durchgeschlagen wird, und daß die dabei entstehenden Glassplitter haften bleiben.

Da die Durchschlagfestigkeit von Verbundsicherheitsglas eine Funktion der Folienhaftung an Glas ist, wird es notwendig, die Glashaftung definiert zu regulieren, um eine den jeweiligen Anforderungen entsprechende Durchschlagfestigkeit zu erzielen.

Im Falle einer zu hohen Haftung trennt sich unter Schlageinwirkung die Folie nicht vom Glas, sondern reißt am Glassprung aufgrund lokaler Überdehnung. Bei zu niedriger Glashaftung lösen sich Glassplitter von der Scheibe.

Nur bei richtig eingestellter Glashaftung löst sich die Folie solchermaßen vom Glas, daß die Stoßenergie von der Folie vernichtet werden kann, ohne daß am Glassprung eine Überdehnung auftritt und sich demzufolge Glassplitter abspalten.

Im allgemeinen ist die Haftung an Glas von weichmacherhaltigen Polyvinylbutyralfolien, die sich seit vielen Jahren als Zwischenlagen für Verbundsicherheitsglas bewährt haben, zu hoch. Es ist bekannt, bei zu stark haftenden Folien die Glashaftung am einfachsten durch Zusatz von Wasser zu reduzieren. Bei stark haftenden Folien werden zur Reduktion der Folienhaftung Wassergehalte von mehr als 0,8 Gew.-% benötigt. Entsprechend hohe Wassergehalte begünstigen allerdings in unerwünschter Weise die Blasenbildung im Verbund.

Bekannt ist darüber hinaus die Reduzierung der Glashaftung durch Zusatz verschiedener Alkali-, Erdalkali- und anderer Metallsalze. Besonders günstig ist die Antihaftwirkung alkalisch reagierender Kaliumverbindungen, wie z. B. Kaliumhydroxid, Kaliumacetat oder Kaliumsalzen, wie sie z. B. in der DE-PS 1 289 281 zum Herabsetzen der Glashaftung beschrieben sind.

Häufig werden als Antihaftmittel auch Magnesiumsalze von Mono- und Dicarbonsäuren genannt. So werden in den US-Patentschriften 3 249 487 und 3 249 490 Magnesiumsalze verschiedener Carbonsäuren erwähnt.

Gute Antihaftmittel sind ferner Betaine, wie sie z. B. in der DE-OS 2 646 280 beschrieben sind, sowie andere Verbindungen mit Betainstruktur.

Die genannten Verbindungen sind teilweise sehr gut geeignet, die Glashaftung von weichgemachten Polyvinylbutyralfolien gezielt zu reduzieren und damit die Durchschlagfestigkeit von Glasverbunden aus diesen Folien zu erhöhen.

Alle genannten Antihaftmittel haben jedoch miteinander gemeinsam, daß sie sich nicht leicht gleichmäßig in dem Polymerisat/Weichmachergemisch verteilen lassen. Am günstigsten ist es dabei noch, wenn man das Antihaftmittel aus wäßriger Lösung auf das Polyvinylbutyral auftrocknet. Es ist nach dem Stand der Technik aber auch möglich, die fertige Folie oder das Glas vor der Verbundglasherstellung mit einer Antihaftmittellösung zu behandeln. Ferner ist auch schon beschrieben worden, das Antihaftmittel in Lösung dem Weichmacher zuzusetzen. Regelmäßig scheidet sich dabei das Antihaftmittel aber aus dem Weichmacher ab. Es bildet sich eine instabile Suspension, die meist nur kurze Zeit gebrauchsfähig bleibt.

Ziel der Arbeiten, die zu der vorliegenden Erfindung führten, war es daher, Antihaftmittel zu finden, die sich in der erforderlichen Konzentration entweder direkt im Weichmacher lösen oder die in Lösung dem Weichmacher zugesetzt werden können, ohne daß eine Abscheidung des Antihaftmittels eintritt.

Es wurde nun überraschenderweise gefunden, daß Metallsalze und/oder Metallchelate von enolisierbaren β-Diketonen diese Bedingungen erfüllen und zu ausgezeichneten Antihaftwirkungen führen können.

Prinzipiell sind sämtliche Metallverbindungen geeignet, die aus enolisierbaren β-Diketonen hergestellt werden können. Insbesondere werden Salze bzw. Metallchelate der β-Diketone mit Metallen der Gruppen IA, IIA, IIIA, IVA und IIB des Periodensystems der Elemente verwendet. Von diesen sind die Magnesiumverbindungen besonders bevorzugt, wobei als anionische Komponente beliebige enolisierbare β-Diketone eingesetzt werden können, z. B. 1,3-Dioxo-1-phenylhexan, 2,4-Dioxo-3-methylpentan oder Acetylaceton.

Bevorzugte Metalle sind z. B. Kalium, Magnesium, Calcium, Aluminium, Zink und Zinn. Besonders bevorzugt ist Magnesium.

Die Herstellung der erfindungsgemäßen Antihaftmittel kann in bekannter Weise erfolgen.

Gegenstand der Erfindung ist daher ein Verfahren zur Reduzierung der Glashaftung von thermoplastischen, weichmacherhaltigen Polyvinylbutyralformmassen durch Vermischen der Formmassenbestandteile mit einem Antihaftmittel aus der Gruppe der Metallverbindungen, dadurch gekennzeichnet, daß man als Antihaftmittel Metallsalze und/oder Metallchelate von enolisierbaren β-Diketonen mit Metallen der Gruppen IA, IIA, IIIA, IVA und IIB des Periodensystems der Elemente oder Gemische dieser Verbindungen einsetzt.

2

Vorzugsweise kann die thermoplastische, weichmacherhaltige Polyvinylbutyralformmasse eine Folie sein.

Gegenstand der Erfindung sind daher ferner thermoplastische, weichmacherhaltige Polyvinylbutyralfolien mit erfindungsgemäß reduzierter Glashaftung, deren Verwendung zur Herstellung von Glasverbunden, sowie außerdem Glasverbunde, enthaltend thermoplastische, weichmacherhaltige Polyvinylbutyralfolie mit erfindungsgemäß reduzierter Glashaftung als Verbundschicht.

Die erfindungsgemäßen Antihaftmittel lassen sich vorzugsweise, zumindest in Gegenwart eines Lösungsmittels bzw. eines Löslichkeitsvermittlers, mit dem Weichmacher zu einer klaren Lösung vereinigen, die längere Zeit stabil bleibt.

Bevorzugt werden die Acetylacetonate der genannten Metalle eingesetzt. Einige solcher Acetylacetonate sind z. B. in Ullmann's Encyclopädie der Technischen Chemie, 4. Auflage, Band 14 (1977), Seite 215 beschrieben. Ganz besonders bevorzugt wird Magnesiumacetylacetonat als Antihaftmittel verwendet.

Die erforderliche Konzentration an Antihaftmittel richtet sich nach der Art des Polyvinylbutyrals, insbesondere nach dem Gehalt an Vinylalkoholeinheiten in diesem Polymerisat, ferner nach der Art des Weichmachers und der Qualität des verwendeten Glases. Im allgemeinen liegen die Konzentrationen bevorzugt zwischen 0,003 und 0,3 Gew.-%, bezogen auf das weichmacherhaltige Polyvinylbutyral. Besonders bevorzugt werden Konzentrationen zwischen 0,01 und 0,2 Gew.-% eingesetzt.

Als Polymerisate sind prinzipiell alle Polyvinylbutyrale verwendbar, die sich für die Herstellung von Verbundfolien eignen. Es sind dies beispielsweise solche mit einem Gehalt an Vinylalkoholeinheiten von vorzugsweise 15 bis 28 Gew.-%, insbesondere 16 bis 24 Gew.-%, sowie mit einem Gehalt an Vinylacetateinheiten von vorzugsweise 1 bis 3 Gew.-%. Sie können auf beliebige Weise hergestellt werden, z. B. nach dem Verfahren der DE-PS 2 732 717.

Die Viskosität der zu verwendenden Polymerisate liegt im üblichen Bereich. Geeignet sind insbesondere Polyvinylbutyrale, deren Viskosität 5 gew.-%iger ethanolischer Lösungen bei 23 °C zwischen 30 und 200 mPa. s liegt (gemessen nach DIN 53015).

Die Antihaftmittel können auf beliebige Weise vor oder während der Verarbeitung mit dem Polymerisat bzw. dem Weichmacher oder dem Polymerisat/Weichmachergemisch vermischt werden. Besonders günstig ist es, das Antihaftmittel direkt im Weichmacher zu lösen, vorzugsweise in Konzentrationen unter 0,05 Gew.-%, bezogen auf das Polymerisat/Weichmachergemisch. Daneben besteht eine bevorzugte Ausführungsform darin, das Acetylacetonat in einem mit dem Weichmacher mischbaren Lösungsmittel bzw. Löslichkeitsvermittler zu lösen und in dieser Form mit dem Weichmacher zu vereinigen, wobei sich eine klare und stabile Lösung bildet. Als Lösungsmittel sind z. B. Alkohole, vorzugsweise Methanol, oder Ketone, vorzugsweise Aceton, geeignet.

Darüber hinaus besteht die Möglichkeit, das Antihaftmittel aus wäßriger Lösung oder direkt in Substanz in das Polyvinylbutyral einzuarbeiten. Nach Zusatz des Antihaftmittels ist das gegebenenfalls mitverwendete Lösungsmittel meist in nur so geringer Konzentration im Polymerisat/Weichmachergemisch vorhanden, daß es die Folieneigenschaften nicht beeinträchtigt. Es kann aber auch vor oder bei der Verarbeitung des Folienkomponentengemisches zur Folie durch Verdampfen oder Entgasen entfernt werden.

Die verwendeten Weichmacherkomponenten sind die nach dem Stand der Technik bekannten. Vorzugsweise werden solche Weichmacher verwendet, die mit den erfindungsgemäß einzusetzenden Polymerisaten unter den einzuhaltenden Bedingungen verträglich sind. So können für Polymerisate mit bis zu ca. 21-22 Gew.-% eingebauten Vinylalkoholeinheiten z. B. Ester des Di-, Tri- und Tetraethylenglykols mit aliphatischen linearen oder verzweigten Carbonsäuren mit 5-10 C-Atomen oder auch Ester der Phthalsäure mit Alkoholen von 4-10 C-Atomen verwendet werden. Bei Polymerisaten mit höheren Anteilen an Vinylalkoholeinheiten kann es vorteilhaft sein, zur Verbesserung der Verträglichkeit Phosphorsäureester in Mischung mit den genannten Weichmachern einzusetzen.

Besonders bevorzugte Weichmacher sind die genannten Ester des Triethylenglykols.

Daneben können auch andere Weichmacher, wie z. B. Adipinsäure- und Sebazinsäureester sowie Phosphorsäureester allein oder in Abmischungen verwendet werden.

Die Konzentration an Weichmacher im Polymerisat/Weichmachergemisch kann vorzugsweise zwischen 20 und 40 Gew.-% liegen, insbesondere zwischen 25 und 35 Gew.-%, bezogen auf das weichmacherhaltige Polyvinylbutyral. Besonders bevorzugt sind Weichmacherkonzentrationen von 27-32 Gew.-%. Bei zu niedrigen Weichmacherkonzentrationen kann die Verarbeitbarkeit der Gemische beeinträchtigt werden, bei zu hoher Weichmacherkonzentration wird häufig die erforderliche Folienfestigkeit nicht mehr erreicht.

Das Polymerisat/Weichmachergemisch kann neben den beanspruchten Antihaftmitteln auch andere Antihaftmittel, wie die bekannten Kalium- oder Magnesiumsalze sowie Betaine und Lecithin, ferner weitere übliche Zusätze, wie z. B. Stabilisatoren und Antiblockmittel in üblichen Konzentrationen, z. B. zwischen 0,01 und 1 Gew.-%, bezogen auf das weichmacherhaltige Polyvinylbutyral, enthalten. Polymerisat, Weichmacher und Zusätze können in bekannter Weise auf einem Kalander oder in einem Extruder zu vorzugsweise 0,3-1,5 mm dicken Folien verarbeitet werden.

Die fertige Glasverbundfolie wird, gegebenenfalls nach Klimatisierung, die erforderlich ist, um den Wassergehalt der Folie auf ca. 0,2-0,8 Gew.-% einzustellen, in üblicher Weise mit Glasscheiben zum Verbund verarbeitet. Die Einstellung des Wassergehalts ist wünschenswert, weil sie die Glashaftung zusätzlich erniedrigt. Damit bei der Verarbeitung keine Blasenbildung eintritt, sollte die angegebene Wasserkonzentration zweckmäßigerweise nicht überschritten werden.

Bei der Glasverbundherstellung wird die Folie beispielsweise zwischen 1 bis 3 mm dicke Glasscheiben gelegt und bei 60-100 °C zu einem Vorverbund verpreßt. Daraus wird, z. B. in einem Autoklaven bei 120-160 °C und 8-16 bar, der Endverbund hergestellt. Bei den in den nachstehenden Beispielen beschriebenen Versuchen wurden die Glasplatten vor der Verbundherstellung mit entsalztem Wasser gewaschen.

Zur Qualitätsprüfung kann der Verbund einem umfangreichen Testprogramm unterworfen werden.

Für die Beurteilung der Verbundqualität, insbesondere der Glashaftung, wird häufig der sogenannte Pummeltest herangezogen. Dabei wird ein Glasverbund auf — 18 °C abgekühlt, auf eine Metallunterlage gelegt und mit einem 500 g schweren Hammer zerschlagen. Entsprechend der Glasmenge, die sich dabei von der Folie ablöst, wird der Verbund mit Pummelwerten zwischen 0 (keine Haftung) und 10 (vollständige Haftung) bewertet. Eine Beschreibung des Tests findet sich in der GB-PS 1 093 864.

Sehr gut läßt sich die Glashaftung mit einem Schertest ermitteln, wie er in der DE-OS 3 038 449 beschrieben ist. Bei den in den nachstehenden Beispielen durchgeführten Messungen werden Verbundstreifen aus 3 mm dickem, mit entsalztem Wasser gewaschenem Floatglas und Polyvinylbutyralfolien der in den Beispielen angegebenen Dicke Verwendet. Die Streifen haben eine Abmessung von ca. 100 × 15 mm, die zu scherende Verbundfläche, die vor jedem Zugversuch genau ausgemessen wird, eine solche von ca. 15 × 7 mm.

Die Verbundstreifen werden in einem handelsüblichen Gerät der Firma Wolpert, Ludwigshafen, mit einer Geschwindigkeit von 200 mm/min. gerissen.

Die optimale Scherfestigkeit, deren Einstellung zu schlagfesten Verbunden führt, liegt im allgemeinen zwischen 1,5 und 5 MPa, vorzugsweise zwischen 2 und 4 MPa. Ein besonders bevorzugter Bereich liegt zwischen 2,5 und 3,5 MPa. Hochfeste Folien können dabei unbeschadet etwas höhere Scherfestigkeiten aufweisen als weniger feste Folien. Dies verringert gleichzeitig die Gefahr des Absplitterns von Glas beim Bruch.

Die für die Praxis wichtigste Testmethode ist der Kugelfalltest nach DIN 52 306 (dynamische Methode). Hierzu werden ca. 30 × 30 cm große Glasverbunde aus zwei 3 mm dicken Floatglasscheiben und 0,76 mm dicken, weichmacherhaltigen Polyvinylbutyralfolien hergestellt. Von den Verbunden wird mit einer 2 260 g schweren Stahlkugel die mittlere Bruchhöhe bestimmt, das ist die Höhe, bei der die Hälfte der geprüften Scheiben durchschlagen wird.

Die Erfindung wird durch die nachfolgenden Beispiele näher erläutert :

## Beispiel 1

Ein Polyvinylbutyral mit einem Gehalt an Vinylalkoholeinheiten von 20,6 Gew.-% wird in einem Rheocordkneter 5 Minuten bei 140 °C und 50 Upm mit 29 Gew.-% Triethylenglykol-di-(2-ethylbuttersäure)-ester, (bezogen auf die Mischung aus Polyvinylbutyral und Triethylenglykol-di-(2-ethylbuttersäure)-ester), in dem 0,01 bis 0,08 Gew.-% Magnesiumacetylacetonat (bezogen auf die Mischung) gelöst waren, verknetet. Aus den Kneterproben werden 0,76 mm dicke Folien gepreßt, die nach der Klimatisierung mit 3 mm dicken Floatglasscheiben im Autoklaven zu Verbundsicherheitsglas weiterverarbeitet werden. Die Ergebnisse der Scherfestigkeitsprüfung sind in der Tabelle 1 zusammengefaßt wiedergegeben.

Gleichzeitig wird ein Null-Wert mit angegeben, resultierend aus einem analogen Versuch ohne einen Zusatz von Magnesiumacetylacetonat.

## Tabelle 1

Antihaftwirkung von Mg-acetylacetonat

| Mg-acetylacetonatanteil (Gew.-%, bez. auf die Mischung aus PV-Butyral u. Weichmacher) | Scherfestigkeit (MPa) | Bruchhöhe (m) | MFI[+)] | |
|---|---|---|---|---|
| | | | 10/150°C | 2,16/190°C |
| 0,000 | 6,31 | 3,40 | 5,11 | 3,80 |
| 0,010 | 5,39 | 3,90 | 7,35 | 4,46 |
| 0,015 | 4,34 | 4,50 | 7,26 | 4,62 |
| 0,020 | 4,19 | 4,90 | 7,21 | 4,25 |
| 0,040 | 3,38 | 6,60 | 7,39 | 4,12 |
| 0,080 | 3,15 | 7,15 | 6,67 | 3,98 |

[-)] MFI = Schmelzindex (kg bei °C)

**0 161 583**

## Beispiel 2

Entsprechend dem Beispiel 1 werden Mischungen aus Polyvinylbutyral, das einen Gehalt an Vinylalkoholeinheiten von 20,6 Gew.-% aufweist, und 29 Gew.-% Weichmacheranteil hergestellt. Der Weichmacher setzt sich zusammen aus Triethylenglykol-di-(2-ethylbuttersäure)-ester mit Anteilen von jeweils 0,01 und 0,015 Gew.-% (bezogen auf die Mischung) Magnesiumacetylacetonat, das im Weichmacher direkt gelöst wurde. Die Weichmacher/Magnesiumacetylacetonat-Lösungen sind farblos und klar.

Die jeweiligen Mischungen werden bei 170 °C zu 0,76 mm dicken Folien extrudiert und anschließend gepreßt. Daraus unter Verwendung von 3 mm dicken Floatglasscheiben hergestellte Verbundsicherheitsgläser haben die in Tabelle 2 zusammengefaßt wiedergegebenen Eigenschaften, vergleichsweise zum Nullwert.

Tabelle 2

Antihaftwirkung von Mg-acetylacetonat

| Mg-acetylacetonatanteil (Gew.-%, bez. auf die Mischung aus PV-Butyral u. Weichmacher) | Scherfestigkeit (MPa) | Bruchhöhe (m) |
|---|---|---|
| 0,000 | 5,45 | 3,5 |
| 0,010 | 4,53 | 4,0 |
| 0,015 | 3,74 | 5,0 |

## Beispiel 3

Das Beispiel 2 wird solchermaßen verändert wiederholt, daß vor der Herstellung des Polymerisat/Weichmachergemischs im Weichmacher außer 0,015 Gew.-% Magnesiumacetylacetonat zusätzlich 0,1 Gew.-% H 365 D[+]) sowie 0,2 Gew.-% Tinuvin P[++]) direkt aufgelöst werden. Diese Mischung wird bei 170 °C zu einer Folie extrudiert. Die Glasverbunde aus dieser Folie sind klar und ergeben im Kugelfalltest mit einer 2 260 g schweren Stahlkugel eine mittlere Bruchhöhe von 5,13 m.

Ohne den Zusatz von Antihaftmitteln und Stabilisatoren resultiert unter sonst gleichen Voraussetzungen eine mittlere Bruchhöhe von 4,20 m.

## Beispiel 4

Entsprechend dem Beispiel 1 werden Mischungen aus Polyvinylbutyral, das einen Gehalt an Vinylalkoholeinheiten von 20,2 Gew.-% aufweist, und 29 Gew.-% Weichmacheranteil hergestellt. Der Weichmacher besteht aus Triethylenglykol-di-(oenanthsäure-) ester mit einem Zusatz von 0,03 Gew.-% (bezogen auf die Mischung) klar gelöstem Magnesiumacetylacetonat.

In gleicher Weise werden Mischungen ohne einen Zusatz von Magnesiumacetylacetonat hergestellt.

Aus den jeweiligen Mischungen werden bei 170 °C 0,76 mm dicke Folien extrudiert, die mit zwei 3 mm dicken Floatglasscheiben zu Glasverbunden weiterverarbeitet werden. Die Eigenschaften der Glasverbunde sind im der Tabelle 3 zusammengefaßt wiedergegeben.

[-]) H 365 D = handelsüblicher Thermostabilisator der Hoechst AG
[--]) Tinuvin P = handelsüblicher Lichtstabilisator Von Ciba-Geigy

Tabelle 3

Antihaftwirkung von Mg-acetylacetonat

| Mg-acetylacetonatanteil (Gew.-%, bez. auf die Mischung aus PV-Butyral u. Weichmacher) | Scherfestigkeit (MPa) | Bruchhöhe (m) |
|---|---|---|
| 0,000 | 7,35 | 3,60 |
| 0,030 | 3,40 | 6,50 |

## Patentansprüche

1. Verfahren zur Reduzierung der Glashaftung von thermoplastischen, weichmacherhaltigen Polyvinylbutyralformmassen durch Vermischen der Formmassenbestandteile mit einem Antihaftmittel aus der Gruppe der Metallverbindungen, dadurch gekennzeichnet, daß man als Antihaftmittel Metallsalze und/oder Metallchelate von enolisierbaren β-Diketonen mit Metallen der Gruppen IA, IIA, IIIA, IVA und IIB des Periodensystems der Elemente oder Gemische dieser Verbindungen einsetzt.

2. Verfahren nach Anspruch 1, dadurch gekennzeichnet, daß man als Antihaftmittel die Magnesiumsalze und/oder Magnesiumchelate von enolisierbaren β-Diketonen einsetzt.

3. Verfahren nach Ansprüchen 1 oder 2, dadurch gekennzeichnet, daß man als Antihaftmittel das Metallsalz und/oder Metallchelat des Acetylacetons einsetzt.

4. Verfahren nach Ansprüchen 1 bis 3, dadurch gekennzeichnet, daß man das Antihaftmittel in einer Menge von 0,003 bis 0,3 Gew.-%, bezogen auf das weichmacherhaltige Polyvinylbutyral, einsetzt.

5. Verfahren nach Ansprüchen 1 bis 4, dadurch gekennzeichnet, daß man das Antihaftmittel, gegebenenfalls unter Mitverwendung eines Lösungsmittels bzw. Löslichkeitsvermittlers, im Weichmacher gelöst einsetzt.

6. Verfahren nach Ansprüchen 1 bis 5, dadurch gekennzeichnet, daß man das Metallsalz und/oder Metallchelat des β-Diketons zusammen mit anderen üblichen Antihaftmitteln und gegebenenfalls weiteren üblichen Zusatzstoffen einsetzt.

7. Verfahren nach Ansprüchen 1 bis 6, dadurch gekennzeichnet, daß die Formmasse eine Folie ist.

8. Weichmacherhaltige Polyvinylbutyralfolien mit reduzierter Glashaftung, hergestellt nach Anspruch 7.

9. Verwendung weichmacherhaltiger Polyvinylbutyralfolien mit reduzierter Glashaftung nach Anspruch 8 zur Herstellung von Glasverbunden.

10. Glasverbunde, enthaltend weichmacherhaltige Polyvinylbutyralfolie mit reduzierter Glashaftung nach Anspruch 8 als Verbundschicht.

## Claims

1. A process for reducing the adhesion to glass of thermoplastic, plasticized polyvinylbutyral molding compositions by mixing the constituents of the molding composition with a non-stick agent belonging to the group of metal compounds, which comprises employing, as the non-stick agent, metal salts and/or metal chelates of enolizable β-diketones containing metals of the groups IA, IIA, IIIA, IVA and IIB of the periodic system of the elements or mixtures of these compounds.

2. The process as claimed in claim 1, wherein the magnesium salts and/or magnesium chelates of enolizable β-diketones are employed as the non-stick agent.

3. The process as claimed in claim 1 or 2, wherein the metal salt and/or metal chelate of acetylacetone is employed as the non-stick agent.

4. The process as claimed in any of claims 1 to 3, wherein the non-stick agent is employed in an amount of 0.003 to 0.3 % by weight, relative to the plasticized polyvinylbutyral.

5. The process as claimed in any of claims 1 to 4, wherein the non-stick agent is employed in the form of a solution in the plasticizer, if appropriate with the concomitant use of a solvent or solubilizer.

6. The process as claimed in any of claims 1 to 5, wherein the metal salt and/or metal chelate of the β-diketone are employed together with other customary non-stick agents and, if appropriate, further customary additives.

6

**0 161 583**

7. The process as claimed in any of claims 1 to 6, wherein the molding composition is sheeting.

8. Plasticized polyvinylbutyral sheeting having a reduced adhesion to glass and produced as claimed in claim 7.

9. The use of plasticized polyvinylbutyral sheeting having a reduced adhesion to glass, as claimed in claim 8, for the production of glass laminates.

10. Glass laminates containing plasticized polyvinylbutyral sheeting having a reduced adhesion to glass, as claimed in claim 8, as the laminating layer.

**Revendications**

1. Procédé pour diminuer l'adhérence à du verre de matières à mouler thermoplastiques en polyvinylbutyral contenant un plastifiant, par mélangeage constituants de ces matières avec un agent diminuant l'adhérence de la famille des composés de métaux, procédé caractérisé en ce qu'on diminue l'adhérence avec des sels de métaux et/ou des chélates de métaux de $\beta$-dicétones énolisables, de métaux des groupes IA, IIA, IIIA, IVA et IIB de la classification périodique des éléments ou avec des mélanges de ces composés.

2. Procédé selon la revendication 1 caractérisé en ce que l'agent diminuant l'adhérence est un sel de magnésium et/ou un chélate de magnésium d'une $\beta$-dicétone énolisable.

3. Procédé selon la revendication 1 ou 2, caractérisé en ce que l'agent qui diminue l'adhérence est un sel de métal et/ou un chélate de métal de l'acétylacétone.

4. Procédé selon l'une quelconque des revendications 1 à 3, caractérisé en ce que la proportion de l'agent contre l'adhérence est de 0,003 à 0,3 % du poids du polyvinylbutyral plastifié.

5. Procédé selon l'une quelconque des revendications 1 à 4, caractérisé en ce que l'on utilise l'agent anti-adhérence en solution dans le plastifiant, le cas échéant en ajoutant un solvant ou un adjuvant de mise en solution.

6. Procédé selon l'une quelconque des revendications 1 à 5, caractérisé en ce que l'on utilise le sel de métal et/ou le chélate de métal de la $\beta$-dicétone conjointement avec d'autres agents courants pour diminuer l'adhérence et le cas échéant d'autres additifs également courants.

7. Procédé selon l'une quelconque des revendications 1 à 6, caractérisé en ce que la matière à mouler est sous la forme d'une feuille.

8. Feuilles de polyvinylbutyral plastifié ayant une adhérence réduite au verre, qui ont été obtenues selon la revendication 7.

9. Utilisation de feuilles en polyvinylbutyral plastifié à l'adhérence au verre réduite selon la revendication 8 pour fabriquer des composites ou stratifiés de verre.

10. Composites ou stratifiés de verre qui comprennent comme couches intermédiaires de liaison, des feuilles de polyvinylbutyral plastifié à adhérence au verre réduite selon la revendication 8.

7